(19) Europäisches Patentamt

European Patent Office

Office européen des brevets

(11) **EP 0 831 254 B1**

(12) **EUROPÄISCHE PATENTSCHRIFT**

(45) Veröffentlichungstag und Bekanntmachung des Hinweises auf die Patenterteilung:
**31.10.2001 Patentblatt 2001/44**

(51) Int Cl.$^7$: **F16H 61/02**

(21) Anmeldenummer: **97114364.9**

(22) Anmeldetag: **20.08.1997**

(54) **Verfahren zur Steuerung von Schaltvorgängen bei einem Fahrzeuggetriebe**

Method for controlling a gear change in a transmission of a vehicle

Méthode pour commander un changement de vitesse dans une transmission d'un véhicule

(84) Benannte Vertragsstaaten:
**AT DE FR GB IT SE**

(30) Priorität: **18.09.1996 DE 19638064**

(43) Veröffentlichungstag der Anmeldung:
**25.03.1998 Patentblatt 1998/13**

(73) Patentinhaber: **Voith Turbo GmbH & Co. KG**
**89522 Heidenheim (DE)**

(72) Erfinder:
• **Depping, Herbert**
**89537 Giengen (DE)**
• **Häberle, Friedrich**
**89518 Heidenheim (DE)**
• **Rotter, Erwin**
**89564 Nattheim (DE)**
• **Schempp, Volker**
**73271 Holzmaden (DE)**
• **Maier, Wilfried**
**89518 Heidenheim (DE)**

(74) Vertreter: **Dr. Weitzel & Partner**
**Friedenstrasse 10**
**89522 Heidenheim (DE)**

(56) Entgegenhaltungen:
EP-A- 0 406 615    EP-A- 0 742 384
WO-A-87/06989    WO-A-89/01421
GB-A- 2 294 302    US-A- 5 129 288
US-A- 5 315 514

EP 0 831 254 B1

**Beschreibung**

Die Erfindung betrifft ein Verfahren zur Steuerung von Schaltvorgängen eines Fahrzeuggetriebes gemäß dem Oberbegriff des Anspruches 1 sowie dem Oberbegriff des Anspruches 11 und eine Steuervorrichtung für ein Fahrzeuggetriebe gemäß dem Oberbegriff des Anspruches 16. Die EP-A-742 384, veröffentlicht am 13.11.1996 zeigt die Merkmale des jeweiligen oberbegriffs. Bisher sind in Antriebssträngen, insbesondere in Antriebssträngen mit Automatikgetrieben, welche nach dem Prinzip eines Drehmomentenwandlers mit äußerer Leistungsverzweigung in Kombination mit nachgeschalteten mechanischen Fahrstufen verwendet werden, Schaltprogramme mit festen Umschaltpunkten oder einfache beschleunigungsabhängige Schaltprogramme bekannt. Bei ersteren erfolgt die Vollastumschaltung normalerweise im oberen Drehzahlbereich des Motors $n_1$ . Die für den Kraftstoff maßgeblichen Hochschaltungen erfolgen somit etwa bei 80 bis 90 % der Motornenndrehzahl. Dadurch wird die größere Motorleistung zur besseren Fahrzeugbeschleunigung ausgenutzt, was in ansteigendem Gelände oder bei großer Personenbesetzung eines Fahrzeuges, insbesondere Busses, erforderlich sein kann. Allerdings ergibt sich dabei auch ein höherer Kraftstoffverbrauch, weil der Motor bei höherer Drehzahl in einem ungünstigeren Kennfeldbereich arbeitet (siehe Motorkennfeld: Verbrauch in Abhängigkeit von der Last und Drehzahl). Bei Bremsbetrieb, d.h. bei eingelegtem Gang und der Gasstellung auf Null hat die Motordrehzahl keinen Einfluß auf den Kraftstoffverbrauch, da die Kraftstofförderung abgestellt ist. Um hier ein Pendeln zwischen den Gängen zu vermeiden, liegen die Rückschaltungen im allgemeinen außer beim Kickdown bei niedrigeren Drehzahlen als die Hochschaltungen. Die Schaltprogramme mit festen Umschaltpunkten sind des weiteren so ausgelegt, daß für Teillast oder ohne Last ebenfalls bestimmte Umschaltpunkte bei kleineren Motordrehzahlen als bei der Vollast vorgegeben werden. Zusätzlich kann eine sogenannte Übertritt- bzw. Kickdownfunktion vorgesehen werden, welche die Möglichkeit eröffnet, die Gänge bis zur höchst zulässigen Motordrehzahl auszufahren. Derartige Schaltprogramme mit festen Umschaltpunkten arbeiten entweder sehr leistungsorientiert und zeichnen sich deshalb durch einen erhöhten Kraftstoffverbrauch aus oder sehr verbrauchsorientiert.

Einfache beschleunigungsabhängige Schaltprogramme sind aus nachfolgenden Druckschriften bekannt.

- DE 42 04 881 A1
- DE 30 18 032 C2
- DE 40 10 104 A1

Aus der DE 42 04 881 A1 ist ein Steuerverfahren und eine Steuereinrichtung für ein Fahrzeuggetriebe bekannt, bei dem u.a. die Fahrzeug-Längsbeschleunigung und die der Abtriebsdrehzahl hinter dem Fahrzeuggetriebe äquivalente Fahrzeuggeschwindigkeit oder die Motordrehzahl erfaßt werden und ein Übersetzungsverhältnis entsprechend einem Motordrehmoment-Fahrzeuggeschwindigkeitsdiagramm oder Motordrehmoment-Motordrehzahldiagramm gewählt wird, wobei das Motordrehmoment als Rechengröße auf der Grundlage der erfaßten Beschleunigung bestimmt wird, wodurch Schaltvorgänge in Abhängigkeit von der Beschleunigung ausgelöst werden und eine Anpassung an den Fahrzeugzustand erreicht wird.

In der DE 30 18 032 C2 ist eine Steuervorrichtung für ein selbsttätig schaltendes Kraftfahrzeuggetriebe mit einer Vorrichtung zum Vergleich von der Ist-Beschleunigung mit der Soll-Beschleunigung des Fahrzeugs angegeben, wobei in Abhängigkeit vom Ergebnis die Lage von Schaltpunkten veränderbar ist. Der Schaltung sind mehrere dreidimensionale Kennfelder mit den Variablen Soll/Ist-Beschleunigungsdifferenz, Fahrgeschwindigkeit und Getriebeabtriebs-Dremoment zugrunde gelegt, zwischen denen eine Umschaltung stattfindet, wobei die Schaltkennlinien je nach Größe der Beschleunigungsdifferenz für positive und negative Werte der Differenz unterschiedlich veränderbar sind.

Aus der DE 40 10 104 A1 ist ein Schaltkontrollsystem für automatische Schaltgetriebe mit variabler Änderung von Ganganordnungen in Anhängigkeit vom Fahrzustand des Fahrzeugs bekannt. Bei diesem System wird der Fahrwiderstand durch Überwachen der Korrelation zwischen dem Motordrehmoment und der Fahrzeugbeschleunigung festgestellt und eine Schalt-Übersetzungsverhältnis-Ganganordnung aus einer Mehrzahl von Ganganordnungen in Abhängigkeit vom Fahrwiderstand hergeleitet. Ein Schaltvorgang wird mittelbar in Abhängigkeit von der Beschleunigung nach einer Kennlinie mit abgestuftem Verlauf ausgelöst.

Die nachveröffentlichte DE 195 16 948 A1 (EP-A-742 384) beschreibt ein Verfahren zum Betreiben einer Antriebseinheit eines Fahrzeuges, umfassend eine Antriebsmaschine und ein Getriebe mit wenigstens zwei Gängen. Das Verfahren gemäß der DE 195 16 948 A1 ist dadurch gekennzeichnet, daß eine die Beschleunigung des Fahrzeuges charakterisierende Größe und eine die Leistung der Antriebsmaschine charakterisierende Größe ständig ermittelt werden. Für einen Umschaltvorgang im Ausgangsgang ist ein Schaltdrehzahlbereich und ein Drehzahlbereich, welcher durch eine kleinste und eine größte erreichbare Drehzahl im Zielgang begrenzt ist, festlegbar. Der Schaltdrehzahlbereich wird wenigstens durch eine untere Schaltdrehzahl und eine obere Schaltdrehzahl und der Drehzahlbereich durch eine untere Zieldrehzahl sowie eine weitere Drehzahl begrenzt. Der Umschaltvorgang wird in Abhängigkeit von der ermittelten Beschleunigung eingeleitet. Die untere Zieldrehzahl wird bei einem Umschaltvorgang in einem ersten Grenzzustand - hohe Beschleunigung bei niedrigen Antriebsdrehzahlen oder geringe Verzögerung bei niedrigen Antriebsdrehzahlen - bei Einleitung einer Umschaltung bei einer Vielzahl von Schaltdrehzahlen erreicht. Der Schaltvorgang zwischen dem ersten Grenzzustand und der größten erreichbaren Drehzahl im Zielgang wird in Abhängigkeit der ermittelten Größen im Schaltdrehzahlbereich im Ausgangsgang eingeleitet.

Die DE 41 24 549 C2 zeigt ein Schaltsteuersystem für das Automatikgetriebe eines Fahrzeuges, bei der die Schalthäufigkeit zwischen Schaltstufen ermittelt wird; bei Überschreitung eines Häufigkeits-Grenzwertes werden andere Schaltkennfelder mit abweichenden Umschaltpunkten gewählt. Bei dieser Schalteinrichtung bleibt der Parameter Beschleunigung bei der Auslösung eines Schaltvorganges allerdings unberücksichtigt.

Weitere Verfahren bzw. Vorrichtungen mit beschleunigungsabhängigen Schaltprogrammen sind aus den Druckschriften

- US-A-5 129 288
- GB-A-2 294 302
- WO 87/06989A
- US-A-5 315 514
- EP-A-0 406 615

bekannt. Die WO 89/01421 beinhaltet eine Steuereinrichtung zum selbsttätigen Schalten von Stufenwechselgetrieben in Kraftfahrzeugen, deren Eingangsgrößen die Motor- und Getriebeausgangsdrehzahl sowie die Gaspedalstellung sind.

Der Erfindung liegt die Aufgabe zugrunde, ein Verfahren zum Betreiben einer Antriebseinheit und eine Vorrichtung zur Durchführung des Verfahrens derart weiterzuentwickeln, daß ein verbessertes Motor-Getriebemanagement mit dem Ziel, ein Mehr an Komfort und ein besseres Beschleunigungs- und Verzögerungsverhalten aus Gründen der Sicherheit bei allen Fahrzuständen sowie eine Verringerung des Kraftstoffverbrauches im Hinblick auf den Umweltschutz erzielt werden kann.

Die erfindungsgemäße Lösung ist durch die kennzeichnenden Merkmale des Anspruchs 1 charakterisiert. Vorteilhafte Ausführungen sind in den Unteransprüchen wiedergegeben.

Zur Erklärung einiger Begriffe:

- Unter "erreichter Drehzahl" wird die im nächsten, d. h. im Zielgang nach der Umschaltung erreichte Antriebs- bzw. Motordrehzahl verstanden.
- "Schaltdrehzahl" ist die vorliegende aktuelle Motordrehzahl in einem Gang, bei welchem die Umschaltung in den nächsthöheren oder nächstniederen Gang erfolgt.
- Als "Grenzdrehzahlen" werden die kleinstmögliche und die größtmögliche Schaltdrehzahl bezeichnet.
- "Schaltdrehzahlbereich" ist der von den Grenzdrehzahlen gebildete Drehzahlbereich eines Ganges von welchem aus die Umschaltung eingeleitet wird.
- Die "Zieldrehzahl" ist die Motor- bzw. Antriebsdrehzahl, welche beim Umschalten bei einer Vielzahl von Schaltdrehzahlen erreicht wird.
- Der "Zieldrehzahlbereich" ist der von den Zieldrehzahlen begrenzte Motor-bzw. Antriebsdrehzahlbereich im Zielgang.
- Mit der Indizierung "konv." werden Schaltverfahren mit festen Umschaltpunkten charakterisiert.

Erfindungsgemäß erfolgt das Umschalten beschleunigungsabhängig. So wird je nach Erfordernis bzw. Fahrwiderstand bei kleineren oder größeren Antriebs-bzw. Motordrehzahlen geschaltet, je nach dem, ob niedriger Kraftstoffverbrauch oder eine ausreichende Beschleunigung zu bevorzugen ist. Für die Schaltung selbst ist die Beschleunigung des Fahrzeuges bzw. dessen Verzögerung maßgebend. Dabei werden immer die zwei folgenden Grenzfahrzustände bzw. Beschleunigungen berücksichtigt:

1. geringe Fahrzeugbelegung in ebenem oder abschüssigem Gelände = hohe Fahrzeugbeschleunigung und
2. hohe Fahrzeugbelegung bei ansteigendem Gelände = geringe Fahrzeugbeschleunigung.

Im erstgenannten Fall ergibt sich eine hohe Fahrzeugbeschleunigung bei niedrigen Antriebsdrehzahlen. Eine Hochschaltung der Gänge kann daher bereits frühzeitig bei relativ niedriger Motordrehzahl erfolgen, was zu einer Senkung des Kraftstoffverbrauchs führt. Aus dem gleichen Grund erfolgt auch die Rückschaltung der Gänge bei kleinerer Verzögerung mit niedriger Motordrehzahl.

Im zweiten Fall ist eine größere Motorleistung erforderlich, weshalb die Hochschaltung erst bei einer relativ großen Motordrehzahl erfolgt. In Abhängigkeit von der gemessenen Fahrzeugbeschleunigung bzw. Verzögerung erfolgt die Hoch- oder Rückschaltung der Gänge zwischen diesen beiden Fahrzuständen gleitend, d.h. in einem Schaltdrehzahlbereich.

Der Schaltdrehzahlbereich selbst ist außerdem von der Laststufe abhängig; bei größerer Last wird demzufolge auch bei höherer Drehzahl geschaltet.

Die Beschleunigungs-/Abtriebsdrehzahlkennlinie weist im Beschleunigungs-/Abtriebsdrehzahldiagramm einen gestuften Verlauf auf.

Hierbei werden die beiden Grenzzustände - geringe Fahrzeugbelegung in ebenem oder abschüssigem Gelände und hohe Fahrzeugbelegung bei ansteigendem Gelände berücksichtigt, d.h. hohe Beschleunigung und geringe Beschleunigung.

Bei hoher Beschleunigung wird der Umschaltvorgang bei geringeren Schaltdrehzahlen, d.h. früher eingeleitet als bei einem konventionellen Schaltprogramm mit festen Umschaltpunkten unter der Voraussetzung, daß gleiche Zieldrehzahlen im Zielgang erreicht werden sollen. Ansonsten, d.h. bei Einleitung des Schaltvorganges bei gleicher Schaltdrehzahl findet eine Verschiebung der erreichten Zieldrehzahl zu höheren Antriebs- bzw. Motordrehzahlen hin statt. Bei geringer Beschleunigung und hoher erforderlicher Leistung erfolgt die Umschaltung in den nächst höheren Gang bei höheren Antriebs- bzw. Motordrehzahlen, die jedoch kleiner sind als bei einem konventionellen Schaltverfahren im Hinblick auf die erreichte Zieldrehzahl. Die sich einstellenden Zieldrehzahlen entsprechen dabei vorzugsweise den konventionell erzielten Drehzahlen bei einem konventionellen Umschaltvorgang ohne Berücksichtigung der Beschleunigung.

Die beiden Zieldrehzahlen bestimmen einen sogenannten Zieldrehzahlbereich. Zwischen diesen beiden Zuständen erfolgt der Umschaltvorgang in Abhängigkeit von der Beschleunigung gleitend. Es ergibt sich somit im Beschleunigungs/Abtriebsdrehzahldiagramm die abgestufte Kennlinie. Die Zieldrehzahlen und die zugehörigen Schaltdrehzahlen können von vornherein frei unter Berücksichtigung der kritischen Motordrehzahlen im Ziel- und im Ausgangsgang in Abhängigkeit ob die Umschaltung in den nächsthöheren oder nächstniederen Gang erfolgt festgelegt werden. Als Zieldrehzahlen können jedoch auch die bei einem konventionellen Schaltvorgang mit festen Umschaltpunkten erzielten festgelegt werden.

Eine abgestufte Kennlinie ist jedoch auch mit nur einer unteren Zieldrehzahl und einer weiteren oberen erreichbaren Drehzahl im Zielgang realisierbar. Die obere erreichbare Drehzahl im Zielgang wird dabei nur bei Umschaltung bei einer Schaltdrehzahl erreicht, während die untere Zieldrehzahl bei Schaltvorgängen, die bei einer Vielzahl von unterschiedlichen Schaltdrehzahlen eingeleitete werden, erreicht wird.

Der gesamte theoretisch zur Verfügung stehende Schaltdrehzahlbereich für Schaltvorgänge in den nächst höheren oder in den nächst niederen Gang ergibt sich immer aus der untersten kritischen Motordrehzahl und der maximalen Motordrehzahl- den sogenannten Grenzdrehzahlen. Bei hoher positiver Beschleunigung erfolgt dabei unter Berücksichtigung der untersten kritischen Motordrehzahl, insbesondere der zu erzielenden Antriebs- bzw. Motordrehzahl im Zielgang beim Hochschalten bzw. bei hoher negativer Beschleunigung unter Berücksichtigung der Antriebs- und Motordrehzahl im Ausgangsgang beim Herunterschalten eine frühere Schaltung. Die Fahreigenschaften können unter Berücksichtigung von Gewicht, Achsübersetzung und Motormoment besser angepaßt werden. Bei niedriger Beschleunigung erfolgt die Umschaltung bei hohen Drehzahlen.

Bei konventionellen Fahrprogrammen mit festen Umschaltpunkten erfolgt das Hoch- oder Herunterschalten zwischen den Gängen bei fest vorgegebenen Schaltdrehzahlen. Im Abtriebsdrehzahl/Antriebsdrehzahl-Diagramm bedeutet dies unterschiedliche Zieldrehzahlen je nach Fahrwiderstand, d.h. je nach Beschleunigung während des Schaltvorganges. Im Extremfall erhält man eine Zieldrehzahl bei gleichbleibender Abtriebsdrehzahl um den Gangsprung dividiert, ansonsten höhere Zieldrehzahlen. Bei dem beschleunigungsabhängigen Schaltverfahren ist der mögliche Schaltdrehzahlbereich dahingehend vergrößert, daß in Abhängigkeit der Beschleunigung des Fahrzeuges die Umschaltung bei hoher Beschleunigung beim Hochschalten bei einer niedrigeren Schaltdrehzahl gegenüber einem konventionelen Schaltverfahren erfolgen kann, jedoch die eine vorher festgelegte Zieldrehzahl nach dem Umschaltvorgang vorliegt. D.h. mit anderen Worten, die Umschaltung beim Hochschaltvorgang bei hoher Fahrzeugbeschleunigung erfolgt bei niedrigeren Motordrehzahlen als bei einem konventionellen Schaltprogramm mit festen Umschaltpunkten; die Umschaltvorgänge können jedoch hinsichtlich Schaltdrehzahl und Beschleunigung derart ausgelegt und eingeleitet werden, daß bei Umschaltvorgängen mit Motordrehzahlen, welche kleiner sind als die kleinstmögliche bei einer konventionellen Schaltung, immer die gleichen Drehzahlen ohne Beschleunigungseinfluß im Zielgang erreicht werden.

In Abhängigkeit von der Beschleunigung des Fahrzeuges und der Last ist der Schaltbereich derart festgelegt, daß wenigstens eine Zieldrehzahl erreicht wird. Diese kann im Bereich der untersten kritischen Drehzahl im Zielgang liegen, darf diese jedoch nicht unterschreiten. Bei Berücksichtigung beider Grenzzustände ist der Schaltbereich derart festgelegt, daß immer eine Drehzahl zwischen beiden Zieldrehzahlen erreicht wird.

Gemäß einem ersten Gedanken der Erfindung wird die Schaltkennlinie des zuvor ausführlich beschriebenen beschleunigungsabhängigen Schaltprogramm bei unterschiedlichen Achsübersetzungen so festgelegt, daß mit ein und demselbem Schaltprogramm der Kraftstoffverbrauch optimiert wird.

Hierzu ist erfindungsgemäß vorgesehen, daß die Beschleunigungs-/Abtriebszahl-Kennlinie $n_{2(a)}$, die dem Schaltprogramm zugrundegelegt wird, auf die Schalthäufigkeit des Hinterachsgetriebes mit der kleinsten Achsübersetzung abgestimmt wird. Das Fahrzeug mit der kleinsten Achsübersetzung ist dann für den vorgesehenen Einsatz optimiert, da im Bereich hoher Beschleunigungen schon bei niedrigen Motordrehzahlen und im Bereich niedriger Beschleunigungen bei höheren Drehzahlen geschaltet wird. Bei Fahrzeugen mit einer Achse größerer Übersetzung liegen die Schaltpunkte im wesentlichen bei höheren Beschleunigungen als bei dem Fahrzeug mit der kleinsten Achsübersetzung. Damit schaltet das Fahrzeug tendenziell bei niedrigeren Motordrehzahlen, was sich wiederum vorteilhaft auf den Kraftstoffverbrauch auswirkt. Gemäß dem ersten Gedanken der Erfindung kann somit ein und dieselbe Schaltkennlinie für unterschiedliche Hinterachsübersetzungen verwendet werden.

Gemäß einem weiteren Gedanken der Erfindung wird die Schaltkennlinie, die dem beschleunigungsabhängigen Schaltprogramm zugrundeliegt, dem jeweiligen Fahrzeugeinsatzgebiet angepaßt.

Hierzu werden die Schaltpunkte in einen Speicher eingelesen und dort über eine gewisse Anzahl von Schaltpunkten ein Mittelwert gebildet, der die Lage der Kennlinie bestimmt. Auf diese Art und Weise ist es möglich, eine Kraftstoffoptimierung trotz unterschiedlicher Einsatzbedingungen zu erreichen, wobei das Unterschreiten einer gewissen Mindestantriebsdrehzahl, die zu einer Komfortbeeinträchtigung führen würde, vermieden wird.

Neben der Lage der Schaltkennlinie kann in einer Weiterbildung der Erfindung auch vorgesehen sein, deren Steilheit in Abhängigkeit vom Einsatzgebiet zu variieren, um so das unerwünschte Unterschreiten der Zieldrehzahl auf jeden Fall vermeiden zu können.

Neben dem Verfahren stellt die Erfindung auch eine Steuervorrichtung insbesondere zur Durchführung des Verfahrens zur Verfügung.

Die Steuervorrichtung umfaßt Mittel zur Aufnahme der Fahrzeugbeschleunigung und der Abtriebsdrehzahl, beispielsweise Sensoren. Vorzugsweise ist die Steuervorrichtung eine Mikrorechnereinheit mit beispielsweise einem Speicherbaustein. In einem ersten Speicherbereich einer Vielzahl von Speicherbereichen sind die Knickpunkte a_min und a_max sowie charakteristische Punkte beispielsweise der Nulldurchgang der gestuften Kennlinie für das beschleunigungsabhängige Schalten $n_2(a)$ abgelegt. Die Steuervorrichtung umfaßt des weiteren einen Mikroprozessor, der mit der aktuell gemessenen Fahrzeugbeschleunigung eine Schaltdrehzahl auf der gestuften Kennlinie aus den abgelegten Parameterwerten berechnet, welche mit der aktuell gemessenen Drehzahl verglichen wird. Ein Hochschaltvorgang wird dann ausgelöst, wenn die aktuell gemessene Drehzahl größer oder gleich der berechneten Drehzahl ist.

Aus den über mehrere Schaltvorgänge in einem weiteren Speicherbereich akummulierten Beschleunigungswerten wird mit Hilfe des Mikroprozessors ein Mittelwert $\bar{S}$ der Beschleunigungswerte, bei denen ein Schaltvorgang ausgelöst wurde, gebildet. Beispielsweise kann eine derartige Mittelung nach 10 Schaltvorgängen vorgenommen werden.

Mit Hilfe des Mikroprozessors ist es möglich, aus dem ersten Speicherbereich charakteristische Werte für die Schaltkennlinie, wie z. B. die später noch definierten Knickpunkte a_max und a_min auszulesen und über einen Algorithmus zu ermitteln, ob der Mittelwert $\bar{S}$ beispielsweise innerhalb von a_max und a_min liegt.

Ist dies nicht der Fall, so können mittels des Mikroprozessors nach einer bestimmten Rechenregel, beispielsweise daß $\bar{S}$ immer in der Mitte des von a_max und a_min definierten Bereiches liegen soll; also

$$(a\_max)_{neu} = \frac{a\ max_{alt} - a\ min_{alt}}{2} + \bar{S}$$

und

$$(a\_min)_{neu} = \bar{S} - \frac{a\_max_{alt} - a\_min_{alt}}{2}$$

eine neue Kennlinie errechnet und in den ersten Speicherbereich eingelesen werden. Ebenso wie eine Adaption von a_max und a_min an den Mittelwert der Beschleunigung $\bar{S}$ kann die Steigung der Kennlinie für a > a_max angepaßt werden. Hierzu verfügt die Steuervorrichtung über einen dritten Speicherbereich, in dem die Antriebsdrehzahlwerte nach dem Schaltvorgang eingelesen und abgelegt werden.

Die erfindungsgemäße Lösung der Aufgabe wird nachfolgend anhand von Figuren erläutert.

Fig. 1 verdeutlicht schematisch das Grundprinzip des beschleunigungsabhängigen Schaltverfahrens anhand von Abtriebsdrehzahl/Beschleunigung-Diagrammen;

Fig. 2 verdeutlicht zur Erklärung ein konventionelles Schaltverfahren;

Fig. 3 verdeutlicht anhand eines Ausschnittes aus einem Motorkennfeld den Zusammenhang von Kraftstoffverbrauch und Drehmoment mit der Antriebsdrehzahl in einem Gang;

Fig. 4a und 4b verdeutlichen die Kennlinien eines beschleunigungsabhängigen Schaltprogrammes anhand eines Beispiels;

Fig. 5a und 5b: Kennlinien der An-/Abtriebsdrehzahl und von Beschleunigung und Abtriebsdrehzahl sowie Schalthäufigkeitsverteilungen für unterschiedliche Hinterachsübersetzungen;

Fig. 6a und 6b: Kennlinien sowie Schalthäufigkeitsverteilungen für unterschiedliche Fahrsituationen sowohl in hügliger Umgebung als auch in der Ebene;

Fig. 7a und 7b: Kennnlinie der An-/Abtriebsdrehzahl und Beschleunigungs-/Abtriebszahldiagramm mit unterschiedlicher Kennliniensteigerung für hügliche Umgebung bzw. Fahrbetrieb in der Ebene.

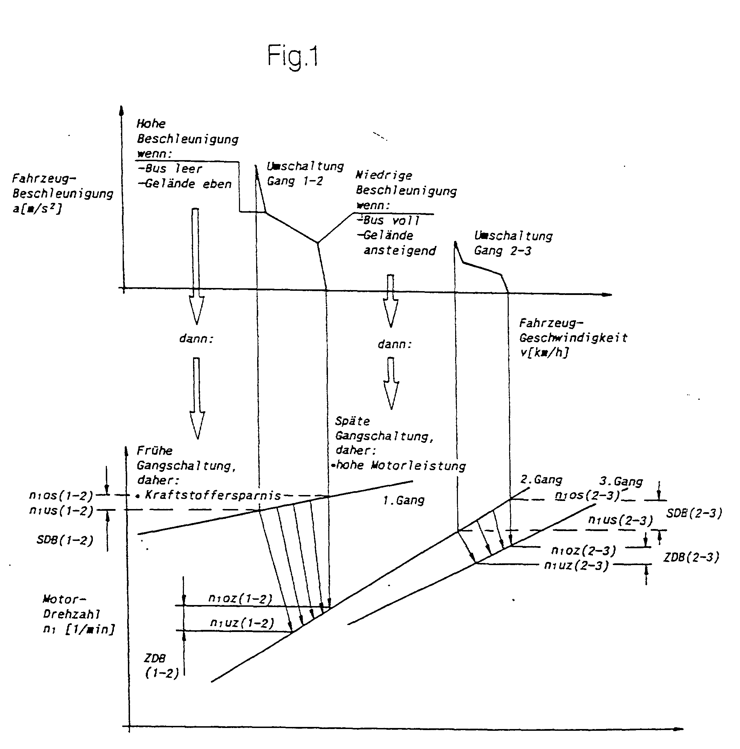

Die Figur 1 verdeutlicht allgemein schematisch das Grundprinzip eines beschleunigungsabhängigen Schaltprogramms. Zur Verdeutlichung sind dabei in zwei Diagrammen zum einen die Fahrzeugbeschleunigung a über die Fahrzeuggeschwindigkeit v, welche proportional der Abtriebsdrehzahl $n_2$ ist, und die Motordrehzahl bzw. Antriebsdrehzahl $n_1$ über die Fahrzeuggeschwindigkeit v für die einzelnen Umschaltvorgänge vom ersten zum zweiten Gang sowie vom zweiten zum dritten Gang aufgetragen. Daraus wird ersichtlich, daß jeweils zwei Grenzfahrzustände bzw. -beschleunigungen berücksichtigt werden:

1. Fahren bei geringer Fahrzeugbelegung in ebenem oder abschüssigem Gelände ergibt eine ausreichende Fahrzeugbeschleunigung bereits bei niedrigen Motordrehzahlen n,. Die Hochschaltung erfolgt dabei bereits frühzeitig bei relativ niedriger Motordrehzahl $n_1$, was im allgemeinen zu einer Senkung des Kraftstoffverbrauches führt.

2. Des weiteren ist bei einer hohen Fahrzeugbelegung oder ansteigendem Gelände eine größere Motorleistung erforderlich. Die Hochschaltung erfolgt daher erst bei relativ großer Motordrehzahl.

Abhängig von der gemessenen Busbeschleunigung bzw. Verzögerung erfolgt die Hoch- oder Rückschaltung der Gänge zwischen diesen beiden Fahrzuständen gleitend, d.h. in einem sogenannten Schaltdrehzahlbereich, im Diagramm mit SDB bezeichnet. Dabei entspricht die Bezeichnung $SDB_{(1-2)}$ dem Schaltdrehzahlbereich zur Umschaltung vom ersten in den zweiten Gang und die Bezeichnung $SDB_{(2-3)}$ dem Schaltdrehzahlbereich bezogen auf die Antriebs- bzw. Motordrehzahl bei Umschaltung vom zweiten in den dritten Gang.

Der Schaltdrehzahlbereich SDB ist des weiteren von der entsprechenden Laststufe abhängig; bei größerer Last wird im allgemeinen auch bei höherer Schaltdrehzahl geschaltet, so daß sich auch eine höhere Motor- bzw. Antriebsdrehzahl im nächsten Gang ergibt. Die Schaltdrehzahlbereiche $SDB_{(1-2)}$ und $SDB_{(2-3)}$ werden jeweils von einer unteren Schaltdrehzahl $n_{1us(1-2)}$ bzw. $n_{1us(2-3)}$ bei der Umschaltung vom ersten in den zweiten bzw. vom zweiten in den dritten Gang und durch eine obere Schaltdrehzahl $n_{1os(1-2)}$ bzw. $n_{1os(2-3)}$ bei der Umschaltung vom ersten in den zweiten bzw. vom zweiten in den dritten Gang begrenzt. Die unterste Schaltdrehzahl $n_{1us(1-2)}$ bzw. $n_{1us(2-3)}$ bestimmt sich dabei aus der untersten kritischen Antriebs- bzw. Motordrehzahl $n_1$ in dem Zielgang. Dadurch wird vermieden, daß durch Unterschreitung dieser kritischen Motordrehzahl ein Fahrzeugbrummen bzw. -ruckeln durch Drehmomentschwingungen auftritt.

Jedem Schaltdrehzahlbereich $SDB_{(1-2)}$ bzw. $SDB_{(2-3)}$ ist ein Zieldrehzahlbereich $ZDB_{(1-2)}$ bzw. $ZDB_{(2-3)}$ im Zielgang zugeordnet. Die Zieldrehzahlbereiche werden durch die eine kleinste Zieldrehzahl $n_{1uz(1-2)}$ bzw. $n_{1uz(2-3)}$ und eine oberste Zieldrehzahl $n_{1oz(1-2)}$ bzw. $n_{1oz(2-3)}$ begrenzt. Die untersten Zieldrehzahlen in den einzelnen Gängen werden beim Hochschalten durch die unterste kritische Antriebs- bzw. Motordrehzahl begrenzt. Beim Herunterschalten ist die kritische Motordrehzahl Kriterium für die Festlegung der untersten Schaltdrehzahl im Ausgangsgang.

Des weiteren ist es möglich, dieses in der Fig. 1 dargestellte normale beschleunigungsabhängige Schalten noch zu variieren. Dies kann durch

a) verbrauchsorientierte
b) leistungsorientierte

beschleunigungsabhängige Schaltverfahren erfolgen.

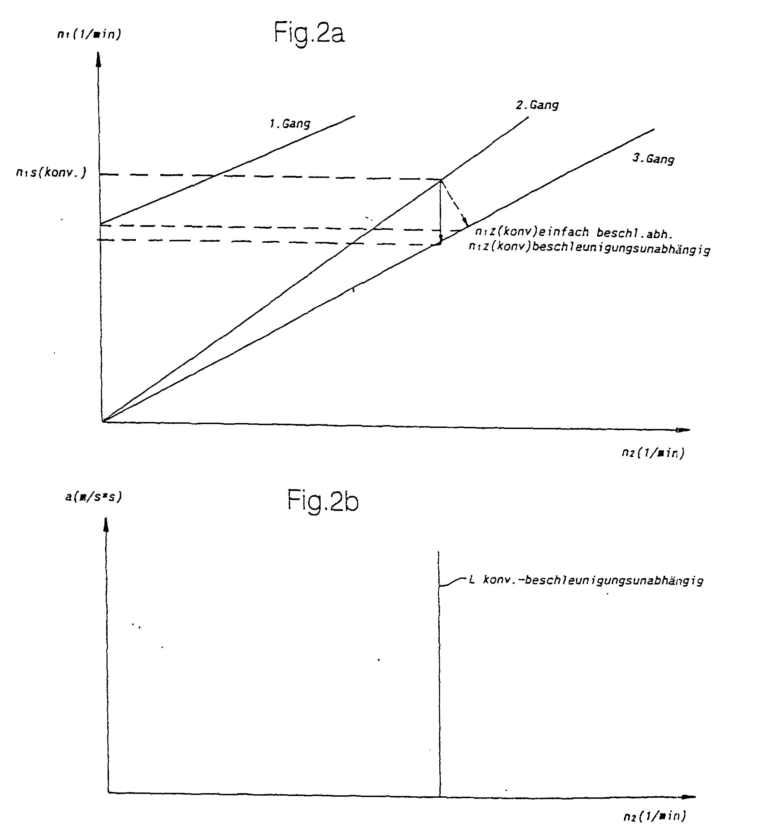

Die Figuren 2a und 2b zeigen in zwei Diagrammen die Kennlinie für ein konventionelles Schaltverfahren mit festen Umschaltpunkten für einen Umschaltvorgang für den Extremfall ohne Beschleunigungseinfluß. In den Diagrammen ist die Fahrzeugbeschleunigung a über die Fahrzeuggeschwindigkeit v, welche proportional der Abtriebsdrehzahl $n_2$ ist, und die Motordrehzahl bzw. Antriebsdrehzahl $n_1$ über die Fahrzeuggeschwindigkeit v für einen Umschaltvorgang aufgetragen. Bei einer konventionellen Umschaltung erfolgt diese bei beispielsweise einer Schaltdrehzahl $n_{1s(konv)}$. Mit dieser wird Extremfall ohne Beschleunigungseinfluß im dritten Gang eine Antriebs- bzw. Motordrehzahl als Zieldrehzahl $n_{1z(konv)\cdot\,beschl.unabhängig}$ erreicht. Im Beschleunigungs/Abtriebsdrehzahldiagramm steht für dieses Schaltverfahren die Kennlinie $L_{konv.-beschl.unabhängig}$.
Da jedoch beispielsweise bei leeren Fahrzeug und Talfahrt beim Schaltvorgang dieses aufgrund der physikalischen Zusammenhänge eine Beschleunigung erfahren kann, wird sich bei eingeleiteten Schaltvorgang bei $n_{1s(konv)}$ im Zielgang nicht $n_{1z(konv)-beschl.unabhängig}$ einstellen sondern eine höhere Antriebs- und damit auch Abtriebsdrehzahl. In diesem Beispiel $n_{1z(konv)-einfach\,beschleunigungsabhängig}$.

In den nachfolgenden Figuren wird das erfindungsgemäße beschleunigungsabhängige Schalten, das der Erfindung zugrundeliegt, mit den verschiedenen möglichen Variationen anhand eines Beispieles erläutert.

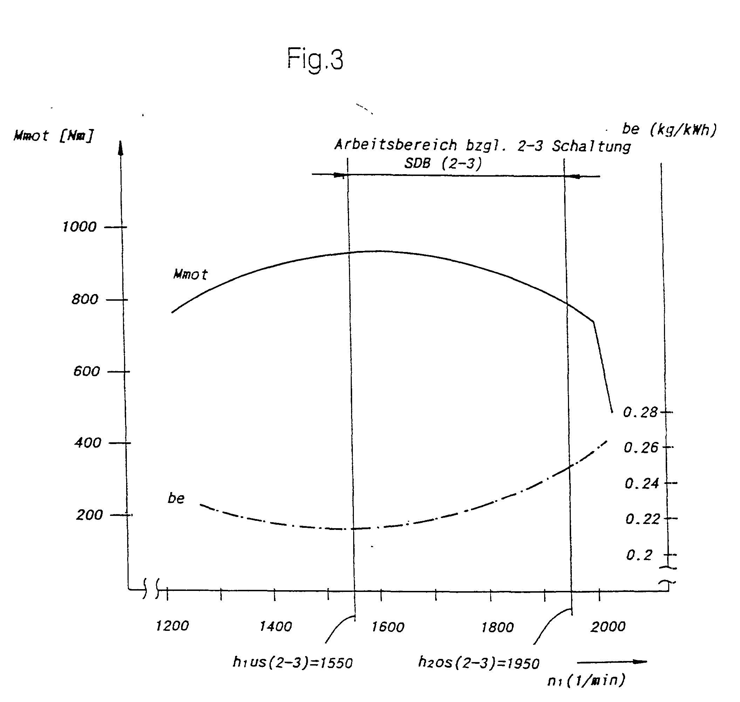

Die Figur 3 verdeutlicht allgemein den Motordrehmomentenverlauf $M_{motorisch}$ über die Antriebsdrehzahl des Motors $n_1$ und den zugehörigen Kraftstoffverbrauch be für den Arbeits- bzw. Schaltdrehzahlbereich im zweiten Gang bezüglich einer Umschaltung vom zweiten in den dritten Gang. Dieser Arbeits- bzw. Umschaltbereich ist hier als Schaltdrehzahlbereich $SDB_{(2-3)}$ gekennzeichnet. Die kleinste Drehzahl $n_1$, bei welcher im zweiten Gang eine Umschaltung in den dritten Gang erfolgen kann, ist hier mit $n_{1us(2-3)}$ bezeichnet. Die größte Drehzahl, bei welcher eine Umschaltung vom zweiten in den dritten Gang erfolgen kann, ist hier mit $n_{1os(2-3)}$ gekennzeichnet. Diese beiden Drehzahlen begrenzen den Schaltdrehzahlbereich $SDB_{(2-3)}$. Aus diesem Diagramm wird ersichtlich, daß im zweiten Gang bei geringer Drehzahl ein geringer Kraftstoffverbrauch sowie ein hohes Motordrehmoment zu verzeichnen ist. Umgekehrt gilt für die größtmögliche Umschaltdrehzahl im zweiten Gang $n_{1os(2-3)}$ der höchste Kraftstoffverbrauch bei geringem Motordrehmoment.

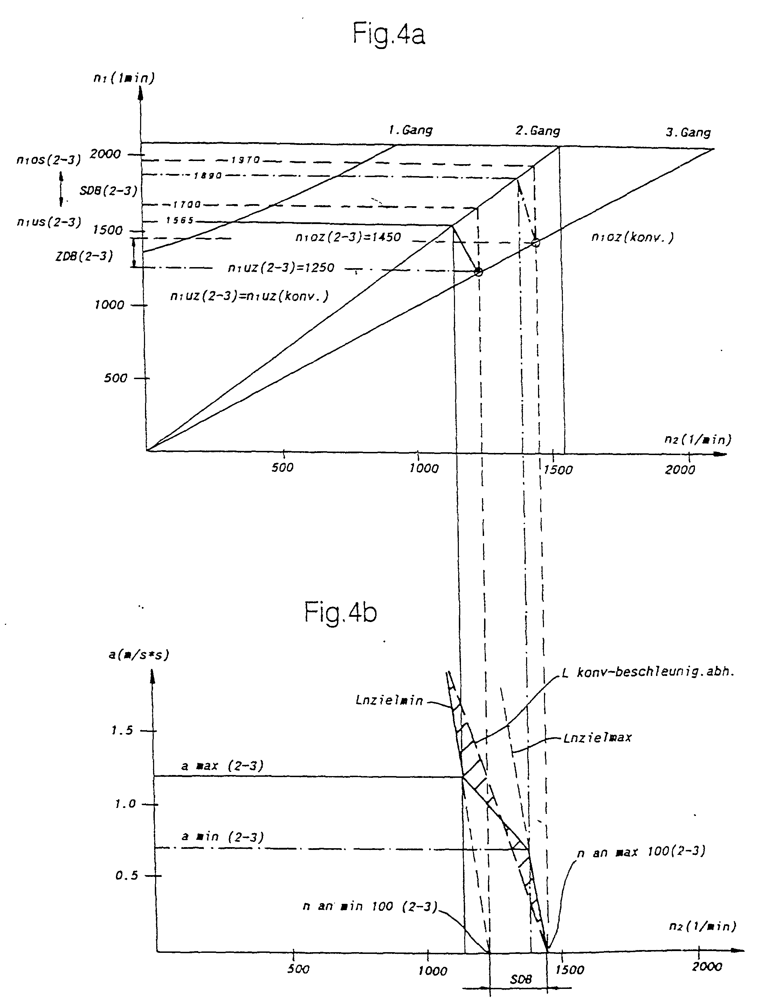

Die Figuren 4a und 4b verdeutlichen anhand zweier Diagramme, in welchen die Antriebsdrehzahl $n_1$ über der Abtriebsdrehzahl $n_2$ sowie die Beschleunigung

a über der Abtriebsdrehzahl $n_2$ aufgetragen sind, ein Beispiel für eine normal beschleunigungsabhängige Version eines beschleunigungsabhängigen Schaltverfahrens für eine Umschaltung vom zweiten in den dritten Gang. Die im Diagramm angegebenen Zahlenwerte dienen lediglich zur Erklärung.

Bei einer konventionellen Umschaltung beträgt die kleinst mögliche Schaltdrehzahl $n_{1us(konv)}$ im zweiten Gang beispielsweise 1700 $min^{-1}$, mit welcher im dritten Gang eine Antriebs- bzw. Motordrehzahl als Zieldrehzahl $n_{1uz(konv)}$ von 1250 $min^{-1}$ ohne Beschleunigungseinfluß erreicht wird. Aufgrund der Berücksichtigung einer möglichen Beschleunigungskomponente kann jedoch die Einleitung des Schaltvorganges wesentlich früher erfolgen, d.h. bei niedrigeren Schaltdrehzahlen $n_{1s(2-3)}$, hier beispielsweise bei der untersten Schaltdrehzahl $n_{1us(2-3)}$ von 1565 $min^{-1}$. Trotzdem wird in diesem Beispiel die Antriebs- bzw. Motordrehzahl $n_{1uz(2-3)} = n_{1uz(konv)}$ von 1250 $min^{-1}$ erreicht. Diese Antriebs- bzw. Motordrehzahl im dritten Gang von 1250 $min^{-1}$ wird bei Umschaltungen mit Schaltdrehzahlen im Schaltdrehzahlteilbereich von $n_{1us(2-3)}$ bis $n_{1us(konv)}$ erzielt. Die Drehzahl $n_{1uz(2-3)}$ wird daher auch als Zieldrehzahl $n_{zielmin}$ bezeichnet. In Analogie können diese Aussagen auch auf die oberste, d.h. größtmögliche Schaltdrehzahl übertragen werden. Die größtmögliche Schaltdrehzahl im zweiten Gang bei einem konventionellen Umschaltvorgang liegt bei $n_{1os(konv)}$=1970 $min^{-1}$. Nach Beendigung der Umschaltung liegt im dritten Gang die Antriebs- bzw. Motordrehzahl $n_{1oz(konv)}$=1450 $min^{-1}$ vor.

Beim beschleunigungsabhängigen Schalten wird jedoch bei Auftreten einer Beschleunigungskomponente der Umschaltvorgang in Abhängigkeit von der Größe der Beschleunigung früher eingeleitet, beispielsweise bei einer Motordrehzahl $n_{1s(2-3)}$ = 1890 $min^{-1}$. Trotzdem werden im dritten Gang wiederum gleiche Antriebs- bzw. Motordrehzahlen $n_{1z}=n_{1oz(konv)}=n_{zielmax}$=1450 $min^{-1}$ erzielt. Bei Beschleunigung a=0 $m*s^{-2}$ erfolgt die Umschaltung vom zweiten in den dritten Gang bei $n_{1s(2-3)}=n_{1os(konv)}$, weshalb diese Umschaltdrehzahl für das beschleunigungsabhängige Umschalten vom zweiten in den dritten Gang mit $n_{1os(2-3)}$ bezeichnet wird.

Der Schaltdrehzahlbereich zur Umschaltung vom zweiten in den dritten Gang $SDB_{(2-3)}$ wird beispielsweise durch die Drehzahlen $n_{1us(2-3)}$ und $n_{1os(2-3)}$ begrenzt. Erfindungsgemäß erfolgt die Festlegung der Schaltdrehzahlen in diesem Schaltdrehzahlbereich derart, daß nach Beendigung des Schaltvorganges, d.h. im dritten Gang eine Antriebsdrehzahl $n_{1z}$ im Zieldrehzahlbereich $ZDB_{(2-3)}$ von $n_{1uz(2-3)}$ bis $n_{1oz(2-3)}$ erreicht und eine unterste kritische Antriebs- bzw. Motordrehzahl im Zielgang beim Hochschalten nicht unterschritten wird.

Durch das frühzeitige Schalten bei hoher Beschleunigung wird eine niedrigere Motor- bzw. Antriebsdrehzahl erreicht. Entscheidend ist, daß bei jeder Beschleunigung der Schaltvorgang in Abhängigkeit von den beiden berücksichtigten Grenzzuständen bei einer Antriebs-bzw. Motordrehzahl, d.h. Schaltdrehzahl $n_{1s}$ im Ausgangsgang eingeleitet wird, bei welcher immer eine Drehzahl - die Zieldrehzahl $n_{1z}$ - im Zieldrehzahlbereich im nächstfolgenden Gang erreicht wird. Somit wird bei der Umschaltung vom zweiten in den dritten Gang eine Beschleunigungskomponente ausgenutzt, welche eine gegenüber dem konventionellen Schaltvorgang mit fest vorgegebenen Schaltpunkten eine höhere Motor- bzw. Antriebsdrehzahl im nächsten Gang, hier dem dritten Gang zur Folge hat. Unter Berücksichtigung der Beschleunigungskomponente kann der Schaltdrehzahlbereich $SDB_{(2-3)}$ bei Schaltvorgang vom zweiten in den dritten Gang gegenüber konventionellen Schaltverfahren zu niedrigeren Antriebs- bzw. Motordrehzahlen hin verschoben werden.

Die Zieldrehzahlen $n_{1uz(2-3)}$ bzw. $n_{1oz(2-3)}$, welche theoretisch die minimale und die maximale Zieldrehzahl $n_{zielmin}$ und $n_{zielmax}$ sein können, bestimmen den Zieldrehzahlbereich $ZDB_{(2-3)}$. Die minimale und die maximale Zieldrehzahl $n_{zielmin}$ und $n_{zielmax}$ bestimmen den theoretisch möglichen Zieldrehzahlbereich $ZDB_{(2-3)theoret}$. Deren Größe wird in der Regel nach den erreichten Zieldrehzahlen im Zielgang bei einem Schaltvorgang ohne Berücksichtigung der Beschleunigung festgelegt. Im dargestellten Fall bedeutet dies, daß bei einer Umschaltung vom zweiten Gang in den dritten Gang bei einer Motor-bzw. Antriebsdrehzahl $n_{1us(2-3)}$ = 1565 $min^{-1}$ und einer darüberliegenden Antriebsdrehzahl von $n_{1s(2-3)}$ <$n_{1s(konv)}$ - beispielsweise $n_{1s(2-3)}$ =1600 $min^{-1}$ - im dritten Gang eine Drehzahl von $n_{uz(2-3)}$ = $n_{zielmin}$ erreicht wird.

Die Umschaltung im zweiten Gang erfolgt dabei bei einem leeren Fahrzeug und maximaler Beschleunigung mit der unteren Grenzdrehzahl $n_{1us(2-3)}$, während bei beispielsweise 100 % Beladung und einer minimalen Beschleunigung die Umschaltung bei sehr hohen Drehzahlen im Schaltdrehzahlbereich $SDB_{(2-3)}$, jedoch bei einer Schaltdrehzahl $n_{1s(2-3)}<n_{1os(konv)}=n_{1os(2-3)}$ eingeleitet wird.

In der Figur 4b sind die sich ergebenden Beschleunigungs-/Abtriebsdrehzahlkennlinien $n_2(a)$ für die Zieldrehzahlen der beiden Grenzzustände

     1) leeres Fahrzeug und hohe Beschleunigung und
     2) Fahrzeug mit beispielsweise 100% Beladung und niedrige Beschleunigung

im Beschleunigungs-/Abtriebsdrehzahl-Diagramm als unterbrochene Linien $n_{zielmin}$ und $n_{zielmax}$ dargestellt.

Die Verbindung zwischen beiden Kennlinien in den Punkten maximaler und minimaler Beschleunigung in der Ebene $a_{max(2-3)}$ und $a_{min(2-3)}$ spiegelt den Einfluß der Beschleunigung wieder und führt zu einem abgestuften Kennlinienverlauf $n_2(a)$ mit Knickpunkten bei $a_{max(2-3)}$ und $a_{min(2-3)}$ für die Beschleunigung bei einer Umschaltung vom zweiten in den dritten Gang. Die Knickpunkte $a_{max(2-3)}$ und $a_{min(2-3)}$ können wie folgt festgelegt werden:

- $a_{max(2-3)}$ ist die maximale Beschleunigung, die das Fahrzeug bei vorgegebener Antriebseinheit bei weitgehend ebener Strecke und weitgehend leerem Fahrzeug vor dem Schaltvorgang erreicht.

- $a_{min(2-3)}$ ist die maximale Beschleunigung, die das Fahrzeug bei vorgegebener Antriebseinheit bei weitgehend ebener Strecke und bei weitgehend voller Beladung vor dem Schaltvorgang erreicht.

Fahrzeugbeschleunigungen $a > a_{max(2-3)}$ können sich bei leerem Fahrzeug beispielsweise bei Bergabfahrten ergeben und Werte $a < a_{min(2-3)}$ bei 100 % Beladung und ansteigendem Gebäude.

Für eine maximale Beschleunigung $a_{max(2-3)}$ bei leerem Fahrzeug wird eine Schaltdrehzahl von $n_{1uS (2-3)}$ festgelegt. Eine minimale Beschleunigung $a_{min(2-3)}$ bei Beladung, hier beispielsweise 100 %, entspricht dabei einer Schaltdrehzahl im Bereich von $n_{1os}$.

Die in der Fig. 4b dargestellte Kennlinie $n_2(a)$ mit den Knickpunkten $a_{max(2-3)}$ und $a_{min(2-3)}$ gilt nur für einen Lastzustand. Entsprechend der Stellung des Leistungsstellgliedes der Antriebsmaschine, beispielsweise der Drosselklappenstellung, ergeben sich jedoch unterschiedliche Lastzustände, die bei der Umschaltung bzw. der Auslegung des Schaltdrehzahlbereiches ebenfalls berücksichtigt werden müssen.

Es besteht die Möglichkeit, den Zieldrehzahlbereich, d.h. die erreichten Drehzahlen, d.h. die nach dem Umschaltvorgang im nächstfolgenden Gang vorliegenden Antriebs- bzw. Motordrehzahlen $n_{1z}$ im theoretisch möglichen Bereich zwischen $n_{1zielmin}$ und $n_{1zielmax}$ in Abhängigkeit vom Motormoment

    1) stufenlos oder
    2) laststufenzugeordnet

festlegen zu können. Im zweiten Fall ergeben sich dann in Abhängigkeit von der Anzahl der Laststufen gleichviele vorgebbare Zieldrehzahlbereiche und diesen zugeordnete Schaltdrehzahlbereiche, welche sich hinsichtlich ihrer Größe voneinander unterscheiden können.

Strichpunktiert ist in der Fig. 4b die bekannte Kennlinie $L_{konv.-einfach\ beschleunigungsabhängig}$ für ein konventionelles einfach beschleunigungsunabhängiges Schalten dargestellt.
Bei leerem Fahrzeug und maximaler Beschleunigung erfolgt der Umschaltvorgang im zweiten Gang bei einer Schaltdrehzahl von $n_{1us(konv)}$, bei minimaler Beschleunigung und bei beispielsweise 100% Beladung trotzdem bei einer Schaltdrehzahl $n_{1os(konv)}$. Die Schraffur verdeutlicht die Abweichungen beider Kennlinien. Daraus wird ersichtlich, daß erfindungsgemäß bei hoher Beschleunigung gegenüber der bekannten konventionellen Kennlinie $L_{knov.-\ einfach\ beschleunigungsabhängig}$ der Schaltvorgang mit geringerer Drehzahl stattfindet, während bei minimaler Beschleunigung und hoher Beladung des Fahrzeuges der Schaltvorgang bei höheren Drehzahlen erfolgt.

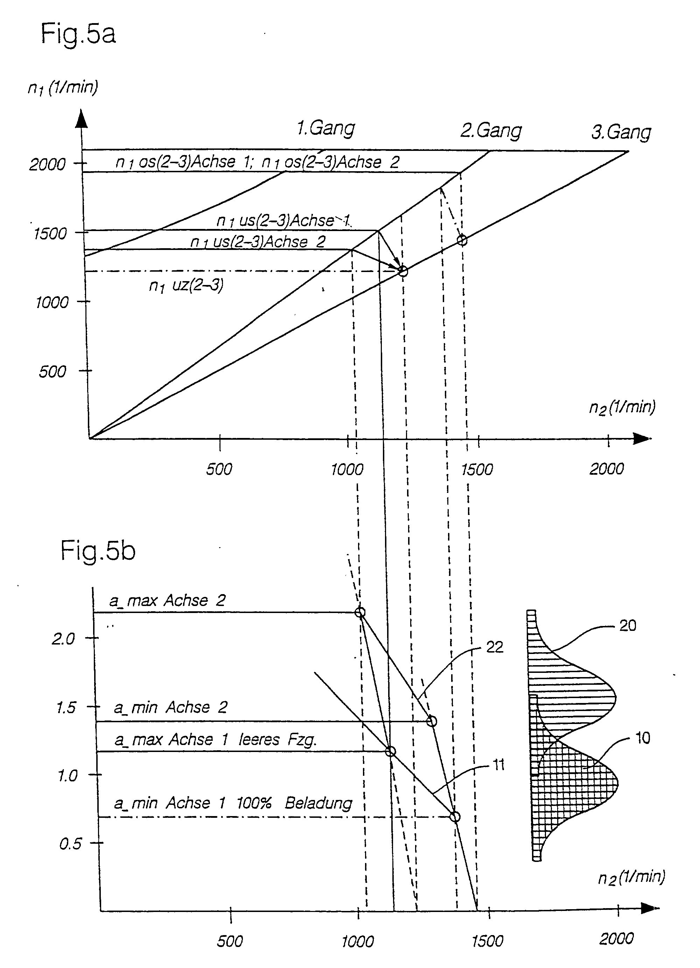

In den Fig. 5a und 5b sind wiederum die Antriebsdrehzahl $n_1$ über der Abtriebsdrehzahl $n_2$ sowie die Beschleunigung a des Fahrzeuges über der Abtriebsdrehzahl $n_2$ aufgetragen. Der Schaltvorgang soll wiederum beispielhaft an einer Umschaltung vom zweiten in den dritten Gang beschrieben werden. Es wird daher bei der Bezeichnung des Knickpunkte auf die Indexierung (2-3) im nachfolgenden verzichtet und die Knickpunkte allgemein mit a_max und a_min bezeichnet.

Wird hinter dem Getriebeabtriebsstrang, dessen Abtriebsdrehzahl $n_2$ für das Schaltprogramm maßgeblich ist, mit unterschiedlichen Hinterachsübersetzungen verbunden, um so die Endgeschwindigkeit des Fahrzeuges zu beeinflussen, so ändert sich natürlich sowohl das Fahrverhalten wie auch das Beschleunigungsverhalten in Abhängigkeit von der gewählten Hinterachsübersetzung. Generall gilt, daß bei hoher Achsübersetzung und niedriger Endgeschwindigkeit höhere Beschleunigungswerte bei gleicher Abtriebszahl $n_2$ erzielt werden als bei niedriger Achsübersetzung und hohen Endgeschwindigkeiten. Dies ermöglicht es, aufgrund der höheren erreichten Beschleunigung bei gleicher Abtriebsdrehzahl bei hochübersetzten Fahrzeugen bei Antriebsdrehzahlen, die niedriger als bei Fahrzeugen mit niedriger Übersetzung liegen, zu schalten, um zur gleichen Zieldrehzahl zu gelangen. Gemäß Fig. 5a kann beispielsweise die untere Schaltgrenze für das Fahrzeug mit hoher Achsübersetzung $n_{us(2-3)Achse\ 2}$ gegenüber der unteren Schaltgrenze für das Fahrzeug mit niedriger Achsübersetzung $n_{1us(2-3)Achse\ 1}$ von ungefähr 1500 U/min auf etwa 1380 U/min abgesenkt werden. Gemäß den zuvor aufgestellten Regeln würde sich für ein Fahrzeug mit einer derartigen Achsübersetzung die in Fig. 5b eingezeichnete Kennlinie 22 mit Knickpunkten $a\_max_{ACHSE\ 2}$ und $a\_min_{ACHSE\ 2}$ ergeben.

Für ein Achsgetriebe mit niedriger Übersetzung liegen wie zuvor bereits erwähnt die vom Fahrzeug erreichten Beschleunigungswerte niedriger, was zu einer Erhöhung der unteren Schaltgrenze $n_{1us(2-3)\ Achse\ 1}$ führt und die Kennlinie 11 mit Knickpunkten $a\_max_{ACHSE\ 1}$ und $a\_min_{ACHSE\ 1}$, die beispielsweise wie zuvor definiert, gebildet wurden, zur Folge hat.

Wie man hieraus ersehen kann, wäre es somit notwendig, in Abhängigkeit von der Achsübersetzung für jedes Fahrzeug eine individuelle Schaltkennlinie $n_2$ (a) für das beschleunigungsabhängige Schaltprogramm vorzusehen.

Das erfindungsgemäße Verfahren hingegen ermöglicht es, für die unterschiedlichsten Achsübersetzungen mit ein und demselben Schaltprogramm optimale Ergebnisse zu erzielen, was zu einer erheblichen Kostenersparnis führt.

Gemäß der Erfindung ist vorgesehen, daß in der allen Achsübersetzungen zugrundeliegenden

Schaltkennlinie $n_2(a)$ die Knickpunkte a_max und a_min für die kleinste Achsübersetzung des Fahrzeuges festgelegt werden, mithin für alle möglichen Achsübersetzungen die Schaltkennlinie 11 verwendet wird.

Wie der Fig. 5b zu entnehmen, liegen bei der niedrigsten Achsübersetzung die überwiegende Zahl der Schaltpunkte, wie in Kurve 10 gezeigt, die die Verteilung der bei Schaltbeginn erreichten Beschleunigungen darstellt, zum überwiegenden Teil in dem durch $a_{max\ Achse\ 2}$ für das leere Fahrzeug und $a_{min\ Achse\ 2}$ für 100%ige Beladung definierten Beschleunigungsbereichen.

Für ein Achsgetriebe mit höhere Getriebeübersetzung liegen die Schaltpunkte gemäß Kurve 20 gezeigt, außerhalb dieses Bereiches. Das bedeutet, daß für eine höhere Übersetzung die Mehrzahl der Schaltvorgänge tendenziell bei niedrigerer Drehzahl als im Falle der optimalen Kennlinie 22 erfolgt. Dies stellt aber wegen der höheren Beschleunigung kein Problem dar, im Gegenteil, aufgrund des Schaltens bei tendenziell niedrigerer Motordrehzahl wirkt sich ein derartiges Schaltverhalten eher vorteilhaft auf den Kraftstoffverbrauch aus. Durch die erfindungsgemäße Auslegung der Kennlinie auf das Achsgetriebe mit der niedrigsten Übersetzung wird erreicht, daß unabhängig von dem dem Abtriebsstrang nachgeschalteten Getriebe mit ein und demselben Schaltprogramm für die möglichen weiteren Achsübersetzungen ein optimales Kraftstoffverhalten erreicht werden kann.

Das Kraftstoffverhalten eines Fahrzeuges wird aber auch ganz wesentlich durch die Umgebung, in der das Fahrzeug eingesetzt wird und durch Fahrzeugparameter bestimmt. So kann ein Schaltvorgang, der bei einer bestimmten Abtriebsdrehzahl und bei einem bestimmten Beschleunigungswert ausgelöst wird, in bergigem Gelände bei einer falsch ausgelegten Kennlinie zu früh erfolgen, was zur Folge hat, daß die angestrebte Zielabtriebsdrehzahl nicht mehr erreicht wird.

Auch Abweichungen der für die Auslegung der Schaltkennlinie zugrunde gelegten Fahrzeugparameter führen zu einem nicht optimalen Schaltverhalten.

Höhere Reibungswiderstände oder geringere Motorleistungen führen zu niedrigeren Beschleunigungswerten, was wiederum zu höheren Schaltdrehzahlen und somit zu höherem Kraftstoffverbrauch führt.

Insbesondere bei Fahrzeugen mit kleiner Achsübersetzung ergeben sich derartige Probleme.

Gemäß der Erfindung ist daher vorgesehen, die Verteilung der Schaltpunkte aufzunehmen und in einem Schaltpunktspeicher des Steuergerätes abzulegen.

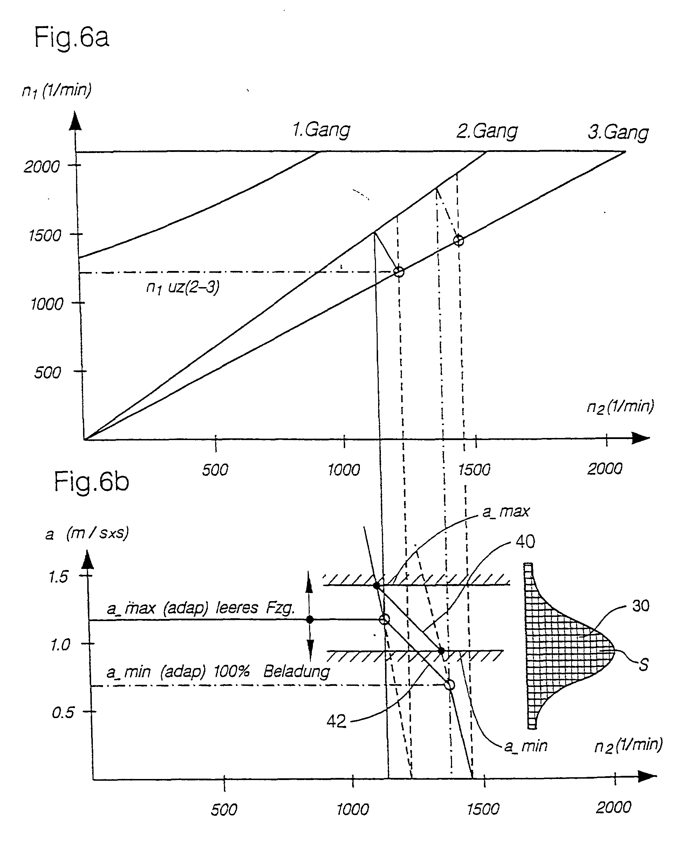

Wie in Fig. 6b dargestellt, ergeben sich für einen Betrieb beispielsweise die Verteilungskurve 30, deren Schwerpunkt mit S bezeichnet wurde. Wird keine Anpassung der Kennlinie vorgenommen, so erfolgt ein Schalten tendenziell bei hoher Antriebsdrehzahl, was zu höherem Kraftstoffverbrauch führt. Eine beispielhafte, nicht an die Verteilungskurve der Schaltpunkte angepaßte Kennlinie, ist die in Fig. 6b dargestellte Kennlinie 40 mit Schaltpunkten a_max und a_min.

Die Erfindung schlägt daher vor, entsprechend der ermittelten Schaltverteilung 30 die Schaltkennlinie anzupassen, derart, daß die Schaltpunkte a_max und a_min mit dem Schwerpunkt S der Verteilungskurve korrelieren. Die sich hieraus ergebenden Kennlinien 42 mit den adaptierten Schaltpunkten a_max(adap) und a_min(adap) stellen dann für die Einsatzstrecke und das entsprechende Fahrzeug das Optimum in Bezug auf den Kraftstoffverbrauch und den Fahrkomfort dar.

Die Mittelwertbildung zur Auffindung des Schaltmittelwertes S kann bereits nach Aufnahme von nur zehn Schaltvorgängen vorgenommen und hierbei gute Ergebnisse erzielt werden. Selbstverständlich ist es auch möglich, eine Mittelwertbildung über mehr als zehn oder weniger als zehn Schaltvorgänge vorzunehmen, wobei sich deren Zahl danach richtet, ob häufig wechselnde Einsatzverhältnisse vorliegen oder nicht.

Wie bereits zuvor erwähnt, ist die Einhaltung der Zieldrehzahl, das ist die Motoranschlußdrehzahl nach dem Schalten, von großer Bedeutung. Ein Unterschreiten der unteren Zieldrehzahl, die in vorliegendem Beispiel ohne Beschränkung hierauf die untere Zieldrehzahl beim Schalten vom 2. in den 3. Gang $n_{1us\ (2-3)}$ ist und die auch die unterste kritische Drehzahl $n_{ziel\ min}$ sein kann, führt zu Fahrzeugbrummen, wohingegen eine Überschreitung einen höheren Kraftstoffverbrauch zur Folge hat. Aufgrund der Streuung und von Änderungen der fahrzeug- und motorspezifischen Eigenschaften ist es nicht möglich, beim Einbau des Getriebes dafür Sorge zu tragen, daß in allen Einsatzfällen beispielsweise die Zieldrehzahl $n_{1uz(2-3)}$ nicht unterschritten wird.

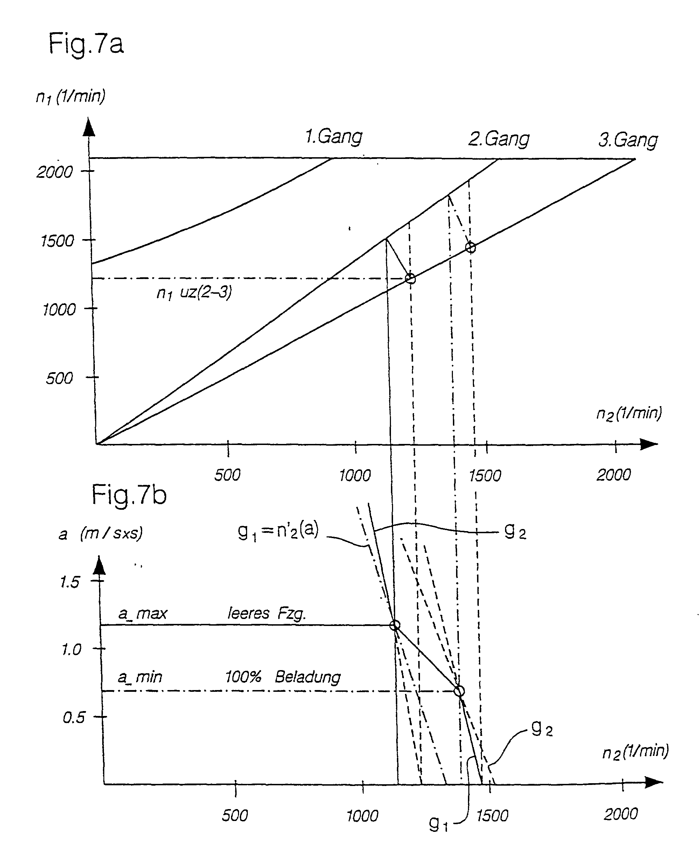

Es wird daher vorgeschlagen, in einer Weiterbildung der Erfindung nicht nur die Beschleunigungswerte beim Schaltvorgang zu erfassen, sondern auch die Motoranschlußdrehzahl nach dem Schaltvorgang. Auch diese kann wiederum in einem Speicher des Steuergerätes abgelegt werden. Mit Hilfe der gespeicherten, sich während des Fahrbetriebes ergebenden Motoranschlußdrehzahlen kann bei eingestelltem a_max, a_min die Steigung $n'_1 = g$ der als Geraden ausgebildeten Beschleunigungs-/Abtriebsdrehzahlkennlinie $n_1(a)_u$ derart gewählt werden, daß bei allen bzw. der überwiegenden Zahl der im Fahrbetrieb vorkommenden Schaltvorgänge immer die minimale Anschlußdrehzahl $n_{1uz}$ erreicht wird. Auf diese Art und Weise wird beispielsweise jedes Fahrzeugbrummen verhindert. Bei dem in Fig. 7b dargestellten Beispiel wurden zwei Beschleunigungs-/Abtriebsdrehzahlgeraden $g_1$ und $g_2$ für ein leeres Fahrzeug dargestellt. Die Kennlinie $g_1$ kann beispielsweise wieder für einen Einsatzfall in bergigem Gelände stehen, während die Kennlinie $g_2$ für den Einsatz in flachem Gelände steht. Bei gleicher vorgegebener Beschleunigung schaltet das Fahrzeug bei dem vorgegebenen Beispiel in bergigem Gelände bei einer höheren Abtriebsdrehzahl als in der Ebene. Dies stellt sicher, daß in bergigem Gelände aufgrund der höheren Schaltdrehzahl $n_1$ bei gleicher Beschleunigung wie in der Ebene dieselbe Zieldrehzahl $n_{1uz(2-3)}$ erreicht wird.

Wie im Falle der Adaption von a min und a max kann auch im Falle einer Anpassung der Geradensteigung $g_1$ bzw. $g_2$ vorgesehen sein, dies während des laufenden Fahrbetriebes vorzunehmen.

Hierzu wird wiederum eine Mittelung über die eingelesenen Werte vorgenommen und dementsprechend eine Änderung der Kennlinienneigung vorgenommen.

Mit der vorliegenden Erfindung ist es somit erstmals möglich, trotz unterschiedlicher Hinterachsübersetzungen ein in Bezug auf das Kraftstoffverhalten optimale Schaltkennlinie zu erhalten. Desweiteren stellt die Erfindung Möglichkeiten zur Verfügung, das Schaltverhalten des Fahrzeuges bei völlig unterschiedlichen Einsatzbedingungen so zu verändern, daß stets ein optimales Kraftstoffverhalten des Fahrzeuges erzielt wird.

**Patentansprüche**

1. Verfahren zur Steuerung von Schaltvorgängen bei einem Fahrzeuggetriebe von einem Ausgangsgang in den nächsthöheren Zielgang, wobei das Verfahren folgende Merkmale aufweist:

    1.1 es wird die Beschleunigung (a) des Fahrzeuges ständig ermittelt;
    1.2 es wird die Abtriebsdrehzahl ($n_2$) hinter dem Fahrzeuggetriebe ständig ermittelt;
    1.3 es wird ein Schaltvorgang ausgelöst, wenn der Beschleunigungswert (a) und der weitgehend zeitgleich aufgenommene Abtriebsdrehzahlwert ($n_2$) auf einen Schaltpunkt fallen, der auf einer Schaltkennlinie ($n_2(a)$) in einem Beschleunigungs-Abtriebsdrehzahldiagramm liegt, wobei die Schaltkennlinie ($n_2(a)$) einen gestuften Verlauf mit wenigstens zwei Knickpunkten (a_max; a_min) aufweist, und die Steigung der Schaltkennlinien für Beschleunigungswerte a_min < a < a_max betragsmäßig stets kleiner gleich der Steigung der Schaltkennlinie für Beschleunigungswerte $a \leq$ a_min oder $a \geq$ a_max ist, also stets gilt:

$$\left| n_2\,(a_1) \right| \leq \left| n_2\,(a_2) \right|$$

    wobei

    $a_1 \in$ [a_min < a < a_max] und
    $a_2 \in$]a_max < a < ∞[oder
    $a_2 \in$ [0 < a < a_min[,

    wobei das Verfahren **dadurch gekennzeichnet ist, daß**

    1.4 bei Verbindung des Fahrzeuggetriebes mit unterschiedlichen Achsübersetzungen die Schaltkennlinie ($n_2(a)$) mit Knickpunkten (a_max; a_min) für alle möglichen Achsübersetzungen die gleiche ist.

2. Verfahren nach Anspruch 1, **dadurch gekennzeichnet, daß** die Schaltkennlinie für alle möglichen Übersetzungen die Schaltkennlinie für die niedrigste der möglichen Achsübersetzungen mit Knickpunkten a_max<sub>kleinste Achsübersetzung</sub> und a_min<sub>kleinste Achsübersetzung</sub> ist.

3. Verfahren nach Anspruch 1 oder 2, **dadurch gekennzeichnet, daß** einer der wenigstens zwei Knickpunkte, der Knickpunkt a_max, dadurch bestimmt werden kann, daß a_max die maximal erreichbare Beschleunigung des im wesentlichen leeren Fahrzeuges bei Fahrt im wesentlichen ebenen Gelände vor Auslösen des Schaltvorganges ist.

4. Verfahren nach einem der Ansprüche 1 bis 3, **dadurch gekennzeichnet, daß** der andere der wenigstens zwei Knickpunkte, der Knickpunkt a_min, dadurch bestimmt werden kann, daß a_min die maximal erreichbare Beschleunigung des im wesentlichen voll besetzten Fahrzeuges bei Fahrt im wesentlichen ebenen Gelände vor Auslösen des Schaltvorganges ist.

5. Verfahren gemäß einem der Ansprüche 1 bis 4, **dadurch gekennzeichnet, daß** die Beschleunigungswerte, bei denen die Schaltvorgänge ausgelöst werden, aufgenommen werden, um eine Schaltpunkthäufigkeitsverteilung zu ergeben.

6. Verfahren nach Anspruch 5, **dadurch gekennzeichnet, daß** die Schaltkennlinie mit Knickpunkten a_max und a_min derart angepaßt wird, daß der Mittelwert der Schaltpunkthäufigkeitsverteilung $\bar{S}$ zwischen a_max und a_min liegt.

7. Verfahren nach Anspruch 6, **dadurch gekennzeichnet, daß** der Mittelwert $\bar{S}$ der Schaltpunkthäufigkeitsverteilung in der Mitte zwischen a_max und a_min liegt.

8. Verfahren nach einem der Ansprüche 1 bis 7, **dadurch gekennzeichnet, daß** die Motoranschlußdrehzahl nach dem Schaltvorgang aufgenommen wird, um eine Motoranschlußdrehzahlverteilung zu ergeben.

9. Verfahren nach Anspruch 8, **dadurch gekennzeichnet, daß** die Steigung $n'_1(a)$ der Kennlinie $n_1(a)$ bei vorbestimmtern a_max so gewählt wird, daß bei der überwiegenden Anzahl der Schaltvorgänge mindestens die Zieldrehzahl $n_{1uz}$ erreicht wird.

**10.** Verfahren nach Anspruch 9, **dadurch gekennzeichnet, daß** bei 90 % aller Schaltvorgänge bei Mittelung über eine Gesamtzahl von Schaltvorgängen, wobei die Gesamtzahl größer als 10 ist, die Zieldrehzahl $n_{1uz}$ nach dem Schaltvorgang erreicht wird.

**11.** Verfahren zur Steuerung von Schaltvorgängen eines Fahrzeuggetriebes von einem Ausgangsgang in den nächsthöheren Zielgang, wobei das Verfahren folgende Merkmale aufweist:

11.1 es wird die Beschleunigung (a) des Fahrzeuges ständig ermittelt;

11.2 es wird die Abtriebsdrehzahl ($n_2$) hinter dem Fahrzeuggetriebe ständig ermittelt;

11.3 es wird ein Schaltvorgang ausgelöst, wenn der Beschleunigungswert (a) und der weitgehend zeitgleich aufgenommene Abtriebsdrehzahlwert ($n_2$) auf einen Schaltpunkt fallen, der auf einer Schaltkennlinie ($n_2(a)$) in einem Beschleunigungs-Abtriebsdrehzahldiagramm liegt, wobei die Schaltkennlinie ($n_2(a)$) einen gestuften Verlauf mit wenigstens zwei Knickpunkten (a_max; a_min) aufweist, und die Steigung der Schaltkennlinien für Beschleunigungswerte a_min < a < a_max betragsmäßig stets kleiner gleich der Steigung der Schaltkennlinie für Beschleunigungswerte a ≤ a_min oder a ≥ a_max ist, also stets gilt:

$$\left|n_2(a_1)\right| \le \left|n_2\,(a_2)\right|$$

wobei

$a_1 \in$ [a_min < a < a_max] und
$a_2 \in$ ]a_max < a < ∞[ oder
$a_2 \in$ [0 < a < a_min[,

wobei das Verfahren **dadurch gekennzeichnet ist, daß** die Beschleunigungswerte, bei denen die Schaltvorgänge ausgelöst werden, aufgenommen werden, um eine Schaltpunkthäufigkeitsverteilung zu ergeben, und daß die Schaltkennlinie mit Knickpunkten a_max und a_min derart angepaßt wird, daß der Mittelwert der Schaltpunkthäufigkeitsverteilung S zwischen a_max und a_min liegt.

**12.** Verfahren nach Anspruch 11, **dadurch gekennzeichnet, daß** der Mittelwert S der Schaltpunkthäufigkeitsverteilung in der Mitte zwischen a_max und a_min liegt.

**13.** Verfahren nach einem der Ansprüche 11 bis 12, **dadurch gekennzeichnet, daß** die Motoransschlußdrehzahl nach dem Schaltvorgang aufgenommen wird, um eine Motoranschlußdrehzahlverteilung zu ergeben.

**14.** Verfahren nach Anspruch 13, **dadurch gekennzeichnet, daß** die Steigung $n'_1(a)$ der Kennlinie $n_1$ (a) bei vorbestimmtern a_max so gewählt wird, daß bei der überwiegenden Anzahl der Schaltvorgänge mindestens die Zieldrehzahl $n_{1uz}$ erreicht wird.

**15.** Verfahren nach Anspruch 14, **dadurch gekennzeichnet, daß** bei 90 % aller Schaltvorgänge bei Mittelung über eine Gesamtzahl von Schaltvorgängen, wobei die Gesamtzahl > 10 ist, mindestens die Zieldrehzahl $n_{1uz}$ erreicht wird.

**16.** Steuervorrichtung für ein Fahrzeuggetriebe, vorzugsweise ein Automatikgetriebe mit

16.1 Mitteln zur Aufnahme der Beschleunigung des Fahrzeuges;

16.2 Mitteln zur Aufnahme der Antriebsdrehzahl des Fahrzeuges;

16.3 Mitteln zur Aufnahme der Abtriebsdrehzahl des Fahrzeuges sowie

16.4 mehreren Speicherbereichen, wobei in einem der mehreren Speicherbereiche eine Schaltkennlinie $n_2(a)$ abgelegt ist, die einen gestuften Verlauf mit wenigstens zwei Knickpunkten a_max und a_min aufweist und die Steigung der Schaltkennlinie für Beschleunigungswerte a_min < a < a_max betragsmäßig stets kleiner gleich der Steigung der Schaltkennlinie für Beschleunigungswerte a ≤ a_min oder a ≥ a_max ist, also stets gilt:

$$\left|n_2(a_1)\right| \le \left|n_2\,(a_2)\right| \text{ wobei}$$

$a_1 \in$ [a_min < a < a_max] und
$a_2 \in$ ]a_max < a < ∞ [ oder
$a_2 \in$ [0 < a < a_min[

16.5 Mitteln zum Auslösen eines Schaltvorganges, wenn die aufgenommene Beschleunigung und die Abtriebsdrehzahl auf einem Schaltpunkt der Schaltkennlinie zu liegen kommen **dadurch gekennzeichnet, daß**

16.6 die Vorrichtung einen weiteren Speicherbereich zum Speichern der Beschleunigungsschaltwerte vor dem Schaltvorgang und/oder der Antriebsdrehzahlen nach dem Schaltvorgang umfaßt und

16.7 Mitteln zum Errechnen des Mittelwertes der gespeicherten Beschleunigungsschaltwerte und/oder Antriebsdrehzahlen sowie

16.8 Mitteln zum Anpassen der Kennlinie an die Mittelwerte der gespeicherten Beschleunigungsschaltwerte und/oder Antriebsdrehzahl.

**Claims**

1. Process for controlling gear changes in a vehicle transmission from an initial gear into the next higher target gear, the process comprising the following features:

   1.1 the acceleration (a) of the vehicle is constantly ascertained;

   1.2 the output speed ($n_2$) downstream of the vehicle transmission is constantly ascertained;

   1.3 a gear change is triggered if the acceleration value (a) and the largely synchronously detected output speed value ($n_2$) occur at a shift point which lies on a shift characteristic curve ($n_2(a)$) in an acceleration/output speed graph, the shift characteristic curve ($n_2(a)$) having a graduated course with at least two knees (a_max; a_min) and the inclination of the shift characteristic curves for acceleration values a_min < a < a_max always being less than or equal to the inclination of the shift characteristic curve for acceleration values a $\leq$ a_min or a $\geq$ a_max, in other words:

   $$\left| n_2\,(a_1) \right| \leq \left| n_2\,(a_2) \right|$$

   wherein

   $a_1 \in$ [a_min < a < a_max] and
   $a_2 \in$ ] a_max < a < $\infty$ [ or
   $a_2 \in$ [0 < a < a_min [

   always applies, wherein the process is **characterised in that**

   1.4 when the vehicle transmission is connected to various axle transmission ratios the shift characteristic curve ($n_2(a)$) with knees (a_max; a_min) is the same for all possible axle transmission ratios.

2. Process according to claim 1, **characterised in that** the shift characteristic curve for all possible transmission ratios is the shift characteristic curve for the lowest of the possible axle transmission ratios with knees a_max$_{\text{smallest axle transmission ratio}}$ and a_min$_{\text{smallest axle transmission ratio}}$.

3. Process according to claim 1 or 2, **characterised in that** one of the at least two knees, the knee a_max, can be determined **in that** a_max is the maximum achievable acceleration of the substantially empty vehicle, when travelling on substantially flat ground, prior to triggering the gear change.

4. Process according to one of claims 1 to 3, **characterised in that** the other of the at least two knees, the knee a_min, can be determined **in that** a_min is the maximum achievable acceleration of the substantially fully loaded vehicle, when travelling on substantially flat ground, prior to triggering the gear change.

5. Process according to one of claims 1 to 4, **characterised in that** the acceleration values at which the gear changes are triggered are detected to produce a shift point frequency distribution.

6. Process according to claim 5, **characterised in that** the shift characteristic curve with knees a_max and a_min is adapted in such a way that the mean value of the shift point frequency distribution $\bar{S}$ lies between a_max and a_min.

7. Process according to claim 6, **characterised in that** the mean value $\bar{S}$ of the shift point frequency distribution is midway between a_max and a_min.

8. Process according to one of claims 1 to 7, **characterised in that** the engine connection speed after the gear change is detected to produce an engine connection speed distribution.

9. Process according to claim 8, **characterised in that** the inclination $n'_1(a)$ of the characteristic curve $n_1(a)$ at predetermined a_max is selected such that at least the target speed $n_{1uz}$ is achieved during the majority of gear changes.

10. Process according to claim 9, **characterised in that** the target speed $n_{1uz}$ is achieved after the gear change in 90% of all gear changes when averaged over a total number of gear changes, the total number being greater than 10.

11. Process for controlling gear changes of a vehicle transmission from an initial gear into the next higher target gear, the process comprising the following features:

    11.1 the acceleration (a) of the vehicle is constantly ascertained;

    11.2 the output speed ($n_2$) downstream of the vehicle transmission is constantly ascertained;

    11.3 a gear change is triggered if the acceleration value (a) and the largely synchronously detected output speed value ($n_2$) occur at a shift point which lies on a shift characteristic curve ($n_2(a)$) in an acceleration/output speed graph, the shift characteristic curve ($n_2(a)$) having a graduated course with at least two knees (a_max; a_min) and the inclination of the shift characteristic curves for acceleration values a_min < a < a_max always being less than or equal to the inclination of the shift characteristic curve for acceleration values a $\leq$ a_min or a $\geq$ a_max, in other words:

$$\left| n_2 (a_1) \right| \leq \left| n_2 (a_2) \right|$$

wherein

$a_1 \in [a\_min < a < a\_max]$ and
$a_2 \in \, ] \, a \, max < a < \infty \, [ \,$ or
$a_2 \in [0 < a < a\_min[$

always applies, wherein the process is **characterised in that**

the acceleration values at which the gear changes are triggered are detected to provide a shift point frequency distribution, and **in that** the shift characteristic curve with knees a_max and a_min are adapted in such a way that
the mean value of the shift point frequency distribution $\bar{S}$ lies between a_max and a_min.

**12.** Process according to claim 11, **characterised in that** the mean value $\bar{S}$ of the shift point frequency distribution lies midway between a_max and a_min.

**13.** Process according to one of claims 11 to 12, **characterised in that** the motor connection speed after the gear change is detected to provide a motor connection speed distribution.

**14.** Process according to claim 13, **characterised in that** the inclination $n'_1(a)$ of the characteristic curve $n_1(a)$ at predetermined a_max is selected such that at least the target speed $n_{1uz}$ is achieved during the majority of gear changes.

**15.** Process according to claim 14, **characterised in that** at least the target speed $n_{1uz}$ is achieved in 90% of all gear changes when averaged over a total number of gear changes, the total number being > 10.

**16.** Control device for a vehicle transmission, preferably an automatic transmission with

16.1 means for detecting the acceleration of the vehicle;

16.2 means for detecting the input speed of the vehicle;

16.3 means for detecting the output speed of the vehicle and

16.4 a plurality of memory locations, a shift characteristic curve $n_2(a)$ being stored in one of the plurality of memory locations, which characteristic curve has a graduated course with at least two knees a_max and a_min and the inclination of the shift characteristic curve for acceleration values a_min < a < a_max always being less than or equal to the inclination of the shift characteristic curve for acceleration values a $\leq$ a_min or a $\geq$ a_max, in other words:

$$\left| n_2 (a_1) \right| \leq \left| n_2 (a_2) \right|$$

wherein

$a_1 \in [a\_min < a < a\_max]$ and
$a_2 \in \, ] \, a\_max < a < \infty \, [ \,$ or
$a_2 \in [0 < a < a\_min[$

always apply;

16.5 means for triggering a gear change if the established acceleration and the output speed come to lie on a shift point of the shift characteristic curve,
**characterised in that**

16.6 the device comprises a further memory location for storing the acceleration shift values prior to the gear change and/or the input speeds after the gear change and

16.7 means for calculating the mean value of the stored acceleration shift values and/or input speeds and

16.8 means for adapting the characteristic curve to the mean values of the stored acceleration shift values and/or input speed.

**Revendications**

**1.** Méthode pour commander un changement de vitesse dans une transmission d'un véhicule, depuis une vitesse initiale à une vitesse cible immédiatement plus haute, la méthode présentant les caractéristiques suivantes:

1.1 on détermine en permanence l'accélération (a) du véhicule;

1.2 on détermine en permanence la vitesse de rotation de la partie menée ($n_2$), en aval de la transmission du véhicule;

1.3 on déclenche un processus de changement de vitesse, lorsque

la valeur d'accélération (a) et la valeur de vitesse de rotation de la partie menée ($n_2$), captées pratiquement simultanément, tombent sur un point de manoeuvre, situé sur une caractéristique de changement de vitesse ($n_2$(a)) dans un diagramme accélération-vitesse de rotation de la partie menée, la caractéristique de changement de vitesse ($n_2$(a)) présentant une allure étagée avec au moins deux points d'inflexion (a_max;a_min) et la pente des caractéristiques de changement de vitesse, pour des valeurs d'accélération a_min < a < a_max, étant quantitativement toujours inférieure ou égale à la pente de la caractéristique de changement de vitesse pour des valeurs d'accélération a $\leq$ a_min ou a $\geq$ a_max, les inégalités suivantes valant donc toujours :

$$|n_2(a_1)| \leq |n_2(a_2)|,$$

où

$a_1 \in$ [a_min < a < a_max] et
$a_2 \in$ ]a_max< a < $\infty$ [ ou
$a_2 \in$[0 < a < a_min[,

la méthode étant **caractérisée par le fait que**

1.4 Lors de la liaison de la transmission du véhicule à des rapports de transmission d'essieu différents, la caractéristique de changement de vitesse ($n_2$(a)) comportant des points d'inflexion (a_max;a_min) est la même pour tous les rapports de transmission d'essieu possibles.

2. Méthode selon la revendication 1, **caractérisée en ce que** la caractéristique de changement de vitesse pour tous les rapports de transmission d'essieu possibles est la caractéristique de changement de vitesse pour le plus petit parmi les rapports de transmission d'essieu possibles, avec les points d'inflexion a_max$_{\text{rapport de transmission d'essieu le plus petit}}$ et a_min$_{\text{rapport de transmission d'essieu le plus petit}}$.

3. Méthode selon la revendication 1 ou 2, **caractérisée en ce que** l'un des au moins deux points d'inflexion, le point d'inflexion a_max, peut être déterminé par le fait que a_max est l'accélération maximale pouvant être atteinte du véhicule pratiquement vide, en roulage sur un terrain pratiquement plat, avant déclenchement du processus de changement de vitesse.

4. Méthode selon l'une des revendications 1 à 3, **caractérisée en ce que** l'autre des au moins deux points d'inflexion, le point d'inflexion a_min, peut être déterminé par le fait que a_min est l'accélération maximale pouvant être atteinte du véhicule pratiquement plein, en cas de roulage sur un terrain pratiquement plat, avant déclenchement du processus de changement de vitesse.

5. Méthode selon l'une des revendications 1 à 4, **caractérisée en ce que** les valeurs d'accélération, pour lesquelles les processus de changement de vitesse sont déclenchés, sont enregistrées afin d'obtenir une indication de distribution des fréquences des points de changement de vitesse.

6. Méthode selon la revendication 5, **caractérisée en ce que** la caractéristique de changement de vitesse comportant les points d'inflexion a_max et a_min est adaptée de manière que la valeur moyenne de la distribution de fréquence des points de changement de vitesse S soit située entre a_max et a_min.

7. Méthode selon la revendication 6, **caractérisée en ce que** la valeur moyenne S de la distribution de fréquence des points de changement de vitesse est située au centre, entre a_max et a_min.

8. Méthode selon l'une des revendications 1 à 7, **caractérisée en ce que** la vitesse de rotation au raccordement au moteur, après le processus de changement de vitesse, est enregistrée pour obtenir une distribution des vitesses de rotation au raccordement au moteur.

9. Méthode selon la revendication 8, **caractérisée en ce que** la pente n'$_1$(a) de la caractéristique $n_1$ (a), pour a_max prédéterminée, est choisie de manière à atteindre au moins la vitesse de rotation cible $n_{1uz}$ pour un nombre majoritaire de processus de changement de vitesse.

10. Méthode selon la revendication 9, **caractérisée en ce que**, pour 90% de tous les processus de changement de vitesse, lors de la formation de la moyenne sur un nombre total de processus de changement de vitesse, le nombre total étant supérieur à 10, on atteint la vitesse de rotation cible $n_{1uz}$ après avoir effectué le processus de changement de vitesse.

11. Méthode de commande des processus de changement de vitesse d'une transmission pour véhicule automobile, depuis une vitesse initiale à une vitesse cible immédiatement supérieure, la méthode présentant les caractéristiques ci-après :

11.1 on détermine en permanence l'accélération (a) du véhicule;

11.2 on détermine en permanence la vitesse de rotation de la partie menée ($n_2$), en aval de la transmission du véhicule;

11.3 on déclenche un processus de changement de vitesse, lorsque la valeur d'accélération (a) et la valeur de vitesse de rotation de la partie menée ($n_2$), captées pratiquement simultanément, tombent sur un point de manoeuvre situé sur une caractéristique de changement de vitesse ($n_2(a)$) dans un diagramme accélération-vitesse de rotation de la partie menée, la caractéristique de changement de vitesse ($n_2(a)$) présentant une allure étagée avec au moins deux points d'inflexion (a_max;a_min), et la pente des caractéristiques de changement de vitesse pour des valeurs d'accélération a_min < a < a_max étant quantitativement toujours inférieure ou égale à la pente de la caractéristique de changement de vitesse pour des valeurs d'accélération a $\leq$ a_min ou a $\geq$ a_max, les inégalités suivantes valant donc toujours :

$$|n_2(a_1)| \leq |n_2(a_2)|,$$

où

$a_1 \in$ [a_min < a < a_max] et
$a_2 \in$ ]a_max< a < $\infty$ [ ou
$a_2 \in$ [0 <a < a_min[,

la méthode étant **caractérisée par le fait que** les valeurs d'accélération, pour lesquelles les processus de changement de vitesse sont déclenchés, sont enregistrées pour obtenir une distribution de la fréquence des points de changement de vitesse, et en ce que la caractéristique de changement de vitesse, comportant des points d'inflexion a_max et a_min, est adaptée de manière que la valeur moyenne de la distribution de fréquence de points de changement de vitesse S soit située entre a_max et a_min.

**12.** Méthode selon la revendication 11, **caractérisée en ce que** la valeur moyenne S de la distribution de fréquence de points de changement de vitesse est située au centre, entre a_max et a_min.

**13.** Méthode selon l'une des revendications 11 à 12, **caractérisée en ce que** la vitesse de raccordement au moteur, après le processus de changement de vitesse, est enregistrée pour obtenir une distribution des vitesses de rotation au raccordement au moteur.

**14.** Méthode selon la revendication 13, **caractérisée en ce que** la pente $n'_1(a)$ de la caractéristique $n_1(a)$, pour a_max prédéterminée, est choisie de manière à atteindre au moins la vitesse de rotation cible $n_{1uz}$ pour un nombre majoritaire de processus de changement de vitesse.

**15.** Méthode selon la revendication 14, **caractérisée en ce que**, pour 90% de tous les processus de changement de vitesse, lors de la formation de la moyenne sur un nombre total de processus de changement de vitesse, le nombre total étant supérieur à 10, on atteint au moins la vitesse de rotation cible $n_{luz}$.

**16.** Dispositif de commande pour une transmission pour véhicule automobile, de préférence une transmission automatique, comportant :

16.1 des moyens pour enregistrer l'accélération du véhicule;

16.2 des moyens pour enregistrer la vitesse de rotation d'entraînement du véhicule;

16.3 des moyens pour enregistrer la vitesse de rotation de la partie menée du véhicule; ainsi qu'

16.4 une pluralité de zones mémoire, dans l'une de la pluralité de zones mémoire étant placée une caractéristique de changement de vitesse $n_2$ (a), qui présente une allure étagée avec au moins deux points d'inflexion a_max et a_min, et la pente de la caractéristique de changement de vitesse, pour des valeurs d'accélération a_min < a < a_max, étant quantitativement toujours inférieure ou égale à la pente de la caractéristique de changement de vitesse pour des valeurs d'accélération a $\leq$ a_min ou a $\geq$ a_max, les inégalités suivantes valant donc toujours :

$$|n_2(a_1)| \leq |n_2(a_2)|,$$

où

$a_1 \in$ [a_min < a < a_max] et

$a_2 \in \,]a\_max\ a < \infty\,[$ ou
$a_2 \in [0 < a < a\_min[$ .

16.5 des moyens pour déclencher un processus de changement de vitesse, lorsque l'accélération et la vitesse de rotation de la partie menée enregistrées sont situées sur un point de changement de vitesse de la caractéristique de changement de vitesse,
**caractérisé en ce que**

16.6 le dispositif comprend une autre zone mémoire, pour mémoriser les valeurs de changement de vitesse par accélération avant le processus de changement de vitesse et/ou les vitesses de rotation d'entraînement après le processus de changement de vitesse, et

16.7 des moyens pour calculer la valeur moyenne des valeurs de changement de vitesse en accélération mémorisées et/ou des vitesses de rotation d'entraînement mémorisées, ainsi que

16.8 des moyens pour adapter la caractéristique aux valeurs moyennes des valeurs de changement de vitesse en accélération mémorisées et/ou de la vitesse de rotation d'entraînement mémorisée.

# Fig.1

Hohe
Beschleunigung
wenn:
—Bus leer
—Gelände eben

Fahrzeug-
Beschleunigung
a[m/s²]

Umschaltung
Gang 1-2

Niedrige
Beschleunigung
wenn:
—Bus voll
—Gelände
ansteigend

Umschaltung
Gang 2-3

dann:

Fahrzeug-
Geschwindigkeit
v[km/h]

dann:

Späte
Gangschaltung,
daher:
•hohe Motorleistung

Frühe
Gangschaltung,
daher:
•Kraftstoffersparnis

2.Gang      3.Gang

$n_1os(1-2)$

$n_1os(2-3)$

$n_1us(1-2)$

1.Gang

$n_1us(2-3)$

SDB(2-3)

SDB(1-2)

$n_1oz(2-3)$

ZDB(2-3)

$n_1uz(2-3)$

Motor-
Drehzahl
$n_1$ [1/min]

$n_1oz(1-2)$

$n_1uz(1-2)$

ZDB
(1-2)

Fig.2a

$n_1(1/min)$

1.Gang

2.Gang

3.Gang

$n_1 s(konv.)$

$n_1 z(konv)einfach\ beschl.abh.$
$n_1 z(konv)beschleunigungsunabhängig$

$n_2(1/min)$

Fig.2b

$a(m/s \times s)$

$L\ konv.-beschleunigungsunabhängig$

$n_2(1/min)$

## Fig.3

Fig.4a

$n_1(1min)$

$n_1os(2-3)$   2000

SDB(2-3)

$n_1us(2-3)$   1500

ZDB(2-3)

1000

500

1970

1890

1700

1565

$n_1oz(2-3)=1450$

$n_1uz(2-3)=1250$

$n_1uz(2-3)=n_1uz(konv.)$

$n_1oz(konv.)$

1.Gang          2.Gang          3.Gang

500          1000          1500          2000

$n_2(1/min)$

Fig.4b

$a(m/s*s)$

1.5

a max (2-3)

1.0

a min (2-3)

0.5

Lnzielmin

L konv-beschleunig.abh.

Lnzielmax

n an max 100(2-3)

n an min 100 (2-3)

500          1000          1500          2000

$n_2(1/min)$

SDB

Fig.5a

Fig.5b

## Fig.6a

## Fig.6b

Fig.7a

$n_1$ (1/min)

2000

1.Gang          2.Gang          3.Gang

1500

$n_1$ uz(2–3)

1000

500

$n_2$(1/min)

500          1000          1500          2000

Fig.7b

$a$  (m / sxs)

$g_1 = n'_2(a)$          $g_2$

1.5

a_max          leeres Fzg.

1.0

a_min          100%  Beladung

0.5          $g_2$

$n_2$(1/min)

500          1000          $g_1$   1500          2000